# FASCICULE DE BREVET EUROPEEN

(11) **EP 3 357 770 B1**
(45) Date de publication et mention de la délivrance du brevet: **03.06.2020**
(21) Numéro de dépôt: 18153582.4
(22) Date de dépôt: 26.01.2018
(51) Int. Cl.: B60S 1/50

(54) **PROCÉDÉ DE RÉCUPÉRATION D EAU DE PLUIE À LA SURFACE D'UN VÉHICULE, CIRCUIT DE RÉCUPÉRATION ET VÉHICULE ÉQUIPÉ D'UN TEL CIRCUIT**
VERFAHREN ZUR RÜCKGEWINNUNG VON REGENWASSER AUF DER OBERFLÄCHE EINES FAHRZEUGS, RÜCKGEWINNUNGSKREISLAUF UND MIT EINEM SOLCHEN KREISLAUF AUSGESTATTETES FAHRZEUG
METHOD FOR RECOVERING RAINWATER AT THE SURFACE OF A VEHICLE, RECOVERY CIRCUIT AND VEHICLE EQUIPPED WITH SUCH A CIRCUIT

(30) Priorité: 02.02.2017 FR 1750891
(43) Date de publication de la demande: 08.08.2018
(73) Titulaire: Valeo Systèmes d'Essuyage, 78322 Le Mesnil Saint Denis (FR)
(72) Inventeur: BARRET, Guillaume, 63500 ISSOIRE (FR); ERKIET, Christophe, 63500 ISSOIRE (FR); DOUPEUX, Severin, 63500 ISSOIRE (FR); COMBEAU, Matthieu, 63500 ISSOIRE (FR); JOMARD, Olivier, 63500 ISSOIRE (FR)
(74) Mandataire: Valeo Systèmes d'Essuyage

(56) Documents cités:
- DE-A1- 10 138 466
- DE-A1- 19 858 635
- US-A- 6 024 803

## Description

### DOMAINE TECHNIQUE DE L'INVENTION

L'invention concerne la récupération des liquides présents sur les surfaces, notamment extérieures, d'un véhicule automobile.

### ARRIERE PLAN TECHNIQUE DE L'INVENTION

L'invention concerne par exemple la récupération de l'eau de pluie ou de condensation présente sur la carrosserie ou sur le pare-brise, ou encore du liquide préalablement projeté sur ces surfaces pour les laver ou les nettoyer, tel que par exemple du liquide de lave-glace.

On connait de nombreuses conceptions de dispositifs ou d'agencements pour la collecte de ces liquides que l'on souhaite récupérer notamment en vue de leurs diverses réutilisations à bord du véhicule, tel que le dispositif du document US 6 024 803 A.

On peut ainsi envisager de réutiliser de l'eau collectée en cas de pluie qui tombe à la surface du toit ou pavillon du véhicule pour différents équipements de lavage ou des équipements à vocation de régulation de la température ou de l'humidité.

Il est notamment utile et souhaitable de récupérer de l'eau pour la « réinjecter » dans un système de lave-glace associé à un système d'essuie-glaces, par exemple pour le maintien de la meilleure visibilité possible à travers le pare-brise.

Un tel liquide collecté contient plus ou moins de corps étrangers et notamment des impuretés et des particules polluantes.

Pour être en mesure de le réutiliser efficacement, il est nécessaire que la quantité de liquide récupérée que l'on va réutiliser présente des qualités suffisantes de « propreté » afin réutiliser présente des qualités suffisantes de « propreté » afin aussi d'éviter d'endommager les systèmes concernés tels que les systèmes de lavage.

Ainsi, il a déjà été proposé de filtrer l'eau collectée avant de la réintroduire dans un réservoir de liquide de lave-glace.

On peut obtenir différentes qualités ou niveaux de pureté en multipliant les filtres de caractéristiques différentes.

On peut par exemple se reporter au contenu des documents WO-A-2014/11614 ou DE-A-102008029254.

Les filtres ou systèmes de filtration utilisés sont encombrants et lourds et nécessitent de plus d'être changés et/ou entretenus.

### BREF RESUME DE L'INVENTION

Afin notamment de remédier à ces inconvénients, l'invention propose un procédé économique de récupération visant à mettre en œuvre un principe de tri ou sélection du liquide collecté.

L'invention propose un Procédé de récupération d'un liquide collecté sur une surface, intérieure ou extérieure, d'un élément de carrosserie ou de vitrage d'un véhicule automobile, caractérisé en ce qu'il consiste :
- a) à analyser une quantité de flux de liquide collecté au moyen d'un dispositif de mesure ou d'estimation d'un paramètre représentatif d'un état de pollution du liquide collecté pour fournir une valeur mesurée ou estimée du niveau de pollution du liquide ;
- b) à comparer ladite valeur mesurée ou estimée à au moins une valeur de seuil du niveau de pollution du liquide ;
- c) et, lorsque la valeur mesurée ou estimée est inférieure à ladite valeur de seuil, à orienter au moins une partie du flux de liquide collecté en direction d'une unité de récupération du liquide collecté, l'étape a) consistant à stocker au moins une partie du flux de liquide collecté dans un réservoir intermédiaire de collecte équipé du dispositif de mesure ou d'estimation.

Ainsi, après analyse et évaluation de la qualité du liquide collecté, on décide de récupérer, ou non, le liquide en vue de son utilisation.

Toutes les quantités de liquide collecté qui ne satisfont pas au seuil de qualité souhaité sont évacuées sous forme de déchets, par exemple d'eaux usées qui peuvent par exemple être évacuées directement dans l'environnement (d'où elles ont été préalablement collectées).

Selon d'autres caractéristiques du procédé :
- le procédé consiste à réitérer l'étape b) de comparaison et, lorsque la valeur mesurée ou estimée est supérieure à ladite valeur de seuil, d) à interrompre ladite orientation et à évacuer le flux de liquide collecté ;
- le paramètre représentatif de l'état de pollution du liquide collecté est sa turbidité ;
- le procédé consiste à effectuer l'étape b) en fonction d'un niveau de présence d'eau collectée ;
- l'étape b) est déclenchée avec temporisation par rapport à l'étape a) de mesure ;
- l'étape d) est déclenchée immédiatement après la détection d'une valeur mesurée ou estimée supérieure à ladite valeur de seuil ;
- l'unité de récupération est une unité d'utilisation ou une unité de stockage du liquide collecté.

L'invention propose aussi un circuit de de récupération d'un liquide collecté sur une surface, intérieure ou extérieure, d'un élément de carrosserie ou de vitrage d'un véhicule automobile, caractérisé en ce qu'il comporte :
- une zone de mesure équipée d'un dispositif de mesure ou d'estimation d'un paramètre représentatif de l'état de pollution du liquide collecté pour fournir une valeur mesurée ou estimée du niveau de pollution du liquide, ladite zone de mesure étant un réservoir intermédiaire de collecte d'au moins une partie du flux de liquide collecté ;
- une canalisation de sortie reliée à ladite zone de mesure ;
- un dispositif commandé qui est relié à ladite canalisation de sortie et qui, en fonction de ladite valeur mesurée ou estimée du niveau de pollution du liquide collecté, autorise ou interrompt la circulation du flux de liquide collecté en direction d'une unité de récupération du liquide collecté.

Selon d'autres caractéristiques du circuit :
- ledit dispositif est une électrovanne commandée ;
- l'électrovanne est à commande par électro-aimant et ressort de rappel vers une position stable d'évacuation ;
- le dispositif de mesure ou d'estimation est un capteur de mesure de la turbidité du liquide collecté ;
- le circuit comporte des moyens de temporisation du changement d'état de l'électrovanne pour autoriser la circulation du flux de liquide collecté en direction d'une unité de récupération du liquide collecté ;
- l'unité de récupération est une unité d'utilisation ou une unité de stockage du liquide collecté ;

L'invention propose encore un véhicule automobile, caractérisé en ce qu'il est équipé de moyens de collecte d'un liquide sur une surface, intérieure ou extérieure, d'un élément de carrosserie ou de vitrage du véhicule, et d'un circuit de récupération selon l'invention.

Selon d'autres caractéristiques du véhicule :
- il comporte au moins un système d'essuyage de la surface extérieure d'une vitre du véhicule, et ladite unité de récupération du liquide collecté comporte une unité de stockage de liquide de lave-glace associée audit système d'essuyage ;
- il comporte au moins un circuit thermique de chauffage ou de refroidissement de l'habitacle du véhicule, ou d'un moteur (par exemple thermique) équipant le véhicule ou d'un accessoire ou équipement équipant le véhicule, et ladite unité de récupération est une unité de stockage de liquide d'alimentation dudit circuit thermique.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 illustre de manière schématique un système de collecte de liquide sur des surfaces extérieures d'un véhicule automobile, qui est associé à un premier mode de réalisation d'un circuit de récupération selon l'invention ;
- la figure 2 illustre de manière schématique un deuxième mode de réalisation d'un circuit de récupération selon l'invention ; et
- la figure 3 est une vue schématique d'un système d'essuyage et de nettoyage d'une vitre, ici d'un pare-brise de véhicule automobile

### DESCRIPTION DETAILLEE DES FIGURES

Dans la suite de la description, des éléments présentant une structure identique ou des fonctions analogues seront désignés par des mêmes références.

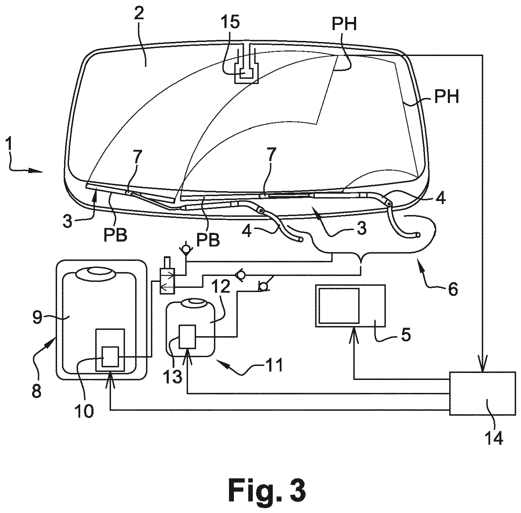

A titre d'exemple non limitatif, l'invention concerne la récupération de liquide, et par exemple d'eau de pluie pouvant être réutilisée pour le fonctionnement d'un système 100 de nettoyage de la surface extérieure 1 d'une vitre d'un véhicule automobile, qui est ici un pare-brise 2, tel qu'illustré à la figure 3.

Le système comporte un dispositif de nettoyage qui comporte ici deux balais d'essuie-glace, ou balais d'essuyage 3, dont chacun est monté sur un bras d'essuie-glace associé 4.

Chaque balai d'essuie-glace est apte à se déplacer angulairement le long de la surface extérieure 1 du pare-brise 2 entre une position extrême basse d'essuyage PB et une position extrême haute d'essuyage PH, et inversement.

Lors de ces mouvements de balayage, les lames d'essuyage qui équipent les balais d'essuyage 3 « essuient » la pluie présente à la surface extérieure du pare-brise et elles permettent de déplacer cette eau en partie basse et/ou latérale du pare-brise où elle peut, de manière connue, être collectée en vue de son éventuelle réutilisation, de même que de l'eau de pluie collectée sur la surface extérieure du toit du véhicule (non représenté).

Le dispositif de nettoyage comprend aussi un moteur électrique 5 qui est destiné à entraîner les bras d'essuie-glace, et donc les balais d'essuyage 3 en balayage angulaire alterné.

Le système de nettoyage comprend aussi un ensemble de moyens de projection de liquide sur la surface extérieure du pare-brise.

Ces moyens comportent ici un système 6 de canalisation(s) qui est relié à des gicleurs (ou buses) 7 destinés à éjecter et projeter du liquide sur le pare-brise 2.

Le système de canalisation(s) 6 est ici alimenté en liquide à projeter par deux circuits amont distincts dont chacun est associé à une fonction spécifique demandée au système de nettoyage.

Pour une fonction de lavage normale ou classique visant à éliminer de l'eau présente à la surface extérieure du pare-brise, une premier circuit 8 comporte un premier réservoir 9 - contenant un liquide de lavage - et une première pompe 10 destinée à faire circuler le liquide de lavage dans le système de canalisation(s) 6.

Pour une fonction de nettoyage telle qu'une fonction de dégivrage, un deuxième circuit 11 comporte un deuxième réservoir 12 - contenant un liquide de dégivrage - et une deuxième pompe 13 destinée à faire circuler le liquide de dégivrage dans le système de canalisation(s) 6.

Une telle fonction dégivrage est utilisée pour enlever du givre formé sur la surface extérieure de la vitre, ici du pare-brise.

Par rapport à une fonction de lavage normale ou classique, la fonction de dégivrage a pour particularité de débarrasser le pare-brise d'une matière adhérente à la surface extérieure 1 du pare-brise 2, pour laquelle le liquide utilisé pour la fonction de lavage n'est pas adapté.

Le système d'essuyage et de nettoyage comprend un boîtier électronique 14 capable de commander le moteur électrique 5 d'entraînement des balais d'essuie-glace 3 et l'activation des pompes 21, 22 des deux circuits 8, 11 d'alimentation en liquide pour faire exécuter au système différents cycles de fonctionnement, dont des cycles adaptés soit à la fonction de lavage normale, avec le liquide de lavage présent dans le premier réservoir 11, soit à la fonction de dégivrage avec le liquide spécifique contenu dans le deuxième réservoir 12.

Le boîtier électronique de commande 14 peut être plus ou moins simple, selon la complexité des opérations prévues pour exécuter les différents cycles et remplir les différentes fonctions.

En outre, le véhicule peut être équipé d'un capteur 15 de mesure de la température extérieure qui est ici situé sur une partie haute du pare-brise 2. Le boîtier électronique de commande 14 peut être relié au capteur 15 de mesure de la température extérieure et exploiter des données fournies par ce capteur pour adapter des paramètres des différents cycles et remplir les différentes fonctions exécutées par le système.

La récupération de liquide, et par exemple d'eau de pluie, telle que proposée par l'invention vise par exemple à pouvoir utiliser l'eau récupérée comme eau de lavage ou rinçage utilisée dans le premier réservoir 9, telle quelle et/ou en mélange avec des additifs appropriés.

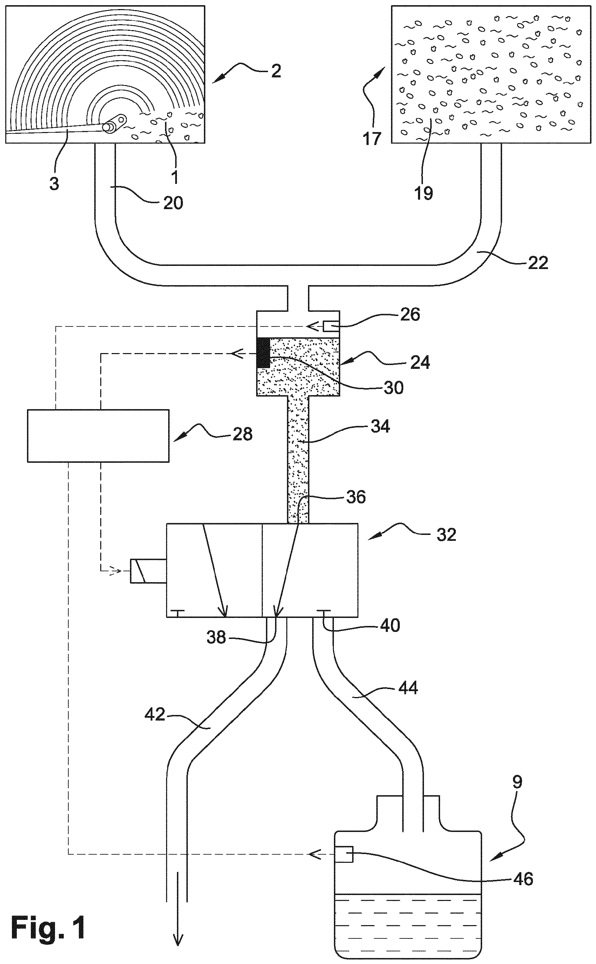

A la figure 1, en partie supérieure et à gauche, on a représenté un pare-brise 2 dont la surface extérieure 1 est balayée par un balai d'essuie-glace 3 et une première canalisation de collecte 20 dans laquelle circule, par exemple par gravité, l'eau collectée par balayage qui est recueillie à la partie basse du pare-brise 2.

En partie supérieure et à droite, on a représenté schématiquement une portion de carrosserie 17 du véhicule qui est par exemple une portion du toit, à la surface extérieure de laquelle la pluie est collectée et recueillie ensuite en direction d'une deuxième canalisation de collecte 22.

Les deux canalisations de collecte 20 et 22 alimentent ici un réservoir 24 de collecte de l'eau à récupérer.

Le réservoir de collecte 24 est équipé d'un capteur de niveau 26 qui transmet des signaux représentatifs de la quantité de liquide contenue dans le réservoir de collecte 24 en direction de moyens électronique d'analyse et de commande tels qu'une Unité Electronique de Commande (UCE) 28 représentée schématiquement à la figure 1.

Le réservoir de collecte 24 est aussi équipé d'un capteur 30 de mesure de la turbidité de l'eau contenue dans le réservoir de collecte 24.

Le capteur de turbidité émet des signaux représentatifs de la turbidité du liquide en direction de l'UCE 28.

De manière connue, un capteur de turbidité évalue la qualité de l'eau en mesurant son niveau de turbidité. Il est capable de détecter des particules en suspension dans l'eau en mesurant la transmission de la lumière et le taux de diffusion avec l'évolution de la quantité de solides en suspension dans l'eau. Si la quantité de solides en suspension dans l'eau augmente, le niveau ou valeur de turbidité du liquide augmente

La turbidité désigne la teneur d'un fluide, et notamment d'un liquide en matières qui le troublent. Les matières en suspension sont définies comme étant l'ensemble du matériel particulaire entraîné passivement dans l'eau. La turbidité correspond à la propriété optique de l'eau qui fait que la lumière incidente est diffusée ou absorbée. Il s'agit d'un paramètre dont la signification dépend de la technique de mesure utilisée. Plusieurs mesures optiques peuvent rendre compte de la turbidité.

Un capteur de turbidité peut posséder différents modes de sortie de signaux, analogique et/ou numérique.

On peut par exemple utiliser un capteur de turbidité numérique dont le seuil est réglable en mode de signal numérique.

L'UCE 28 peut aussi être conçue de manière à convertir un signal analogique représentatif de la turbidité fourni par le capteur de turbidité 30 en un signal numérique.

Ici en partie basse, le réservoir de collecte 24 est relié à une électrovanne électrohydraulique 32 par une canalisation de sortie 34.

L'électrovanne 32 est ici du type à trois voies deux positions, avec une entrée 36 et deux sorties 38 et 40.

La canalisation de liaison 34 est reliée à l'entrée 36, tandis que la première sortie est reliée à une canalisation 42 dite d'évacuation, et la deuxième sortie est reliée à une canalisation 44 dite de récupération.

L'électrovanne 32 est illustrée dans sa position stable de repos dans laquelle l'entrée 36 communique avec la première sortie 38, c'est-à-dire dans laquelle la canalisation de sortie 34 est reliée à la canalisation d'évacuation 42.

L'électrovanne est reliée à l'UCE 28 qui peut en commander le changement de position depuis sa position stable de repos, vers sa deuxième position (non représentée) dans laquelle l'entrée 36 communique avec la deuxième sortie 40, c'est-à-dire dans laquelle la canalisation de sortie 34 est reliée à la canalisation de récupération 44.

Selon une variante non représentée, l'électrovanne 32 pourrait être du type à trois voies et trois positions, avec le même agencement des voies, mais avec une troisième position dans laquelle aucune des deux sorties 38 ou 40 n'est reliée à l'entrée 36, c'est-à-dire une troisième position dans laquelle la canalisation de sortie est « fermée » et aucun liquide collecté ne s'écoule du réservoir de collecte 24 à travers l'électrovanne 32.

Les écoulements et circulation de liquide sont décrits et illustrés comme s'effectuant par gravité.

Sans sortir du cadre de l'invention, ils peuvent notamment être réalisés par des pompes ou des circulateurs adaptés commandés par l'UCE 28.

La canalisation de récupération 44 débouche en aval dans le premier réservoir 9 pour pouvoir utiliser l'eau récupérée comme eau de lavage ou rinçage, telle quelle et/ou en mélange avec des additifs appropriés.

Comme le réservoir de collecte 24, le réservoir 9 qui peut être rempli par de l'eau de récupération peut être équipé d'un capteur de niveau 46 qui transmet des signaux représentatifs de la quantité de liquide contenue dans le réservoir 9 en direction de l'UCE 28.

L'invention n'est pas limitée à l'utilisation d'un réservoir intermédiaire de collecte 24 tel que décrit.

En variante, il est possible de relier directement une source de collecte à la canalisation de sortie 34, en munissant le trajet entre la source de collecte et l'électrovanne 32 du capteur de turbidité 30.

L'agencement et le circuit qui viennent d'être décrits en référence à la figure 1 permettent la mise en œuvre d'un procédé de récupération selon l'invention.

L'analyse par le capteur de turbidité 30 de l'eau fournit un paramètre représentatif d'un état de pollution de l'eau sous la forme d'un signal transmis à l'UCE 28 au sein de laquelle st réalisée une comparaison de la valeur fournie par le capteur de turbidité 30 avec une valeur de seuil admissible du niveau de pollution de l'eau collectée en vue de sa récupération comme tout ou partie du liquide de lavage.

Tant que la valeur mesurée du niveau de pollution est inférieure à la valeur de seuil mémorisée ou cartographiée dans l'UCE, l'électrovanne 32 est activée pour orienter le flux de liquide collecté en direction de la canalisation de récupération 44 et du réservoir 9.

L'opération de comparaison à la valeur de seuil est réitérée de manière régulière (continue ou séquencée) de telle sorte que dès que la valeur mesurée par le capteur de turbidité 30 devient supérieure à ladite valeur de seuil, l'UCE interrompt la commande de l'électrovanne 32 qui revient dans sa position stable illustrée à la figure 1 de manière à évacuer la totalité de l'eau collectée sous forme de déchet.

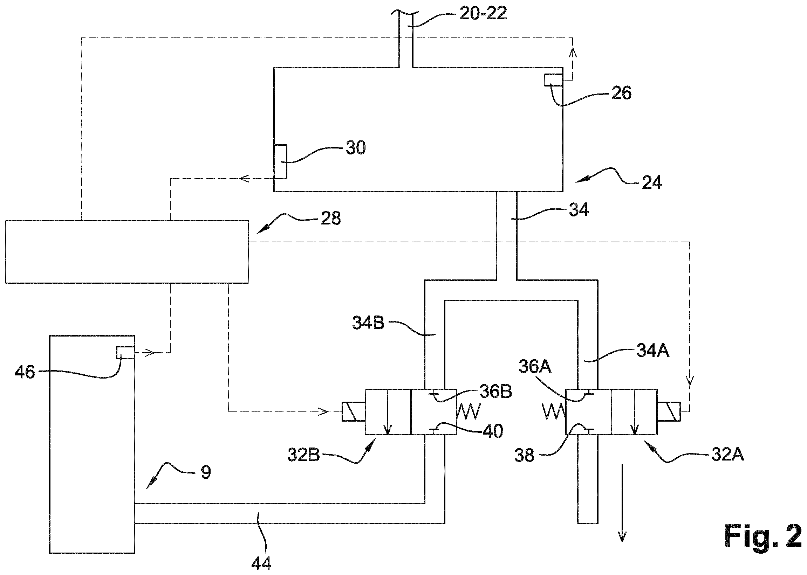

L'utilisation d'un réservoir de collecte 24 permet de stocker temporairement de l'eau collectée, qui est par exemple identifiée comme étant de bonne qualité, notamment lorsque par exemple le réservoir 9 est « plein » selon l'information fournie par le capteur 46. Ceci peut être réalisé en utilisant une électrovanne à trois positions telle qu'évoquée précédemment ou avec un circuit selon le deuxième mode de réalisation de la figure 2.

De la même manière, le stockage éventuel de liquide dans le réservoir de collecte 24 est géré en fonction du niveau de remplissage de ce dernier fourni par le capteur de niveau 26.

En cas de trop plein, l'eau collectée, même de bonne qualité, peut être évacuée dans un réservoir intermédiaire de stockage équipé du dispositif de mesure ou d'estimation.

Selon le deuxième mode de réalisation illustré à la figure 2, la canalisation de sortie 34 se divise en :
- une première canalisation de sortie 34A reliée à la canalisation d'évacuation 42 à travers une première électrovanne 32A ; et
- une deuxième canalisation de sortie 34B reliée à la canalisation de récupération 44 à travers une deuxième électrovanne 32B.

Chacune des deux électrovannes 32A et 32B est commandée par l'UCE 28.

Chaque électrovanne 32A, 32B est ici du type à deux voies deux positions avec une entrée 36A, 36B respectivement reliée à la canalisation de sortie associée 34A, 34B, et une sortie 40, 38 respectivement reliée pour l'une à la canalisation d'évacuation 42, et pour l'autre à la canalisation de récupération 44.

Dans sa position stable de repos, chaque électrovanne 32A, 32B interrompt la communication entre son entrée et sa sortie et donc respectivement entre la canalisation de sortie 34A et la canalisation d'évacuation 42 d'une part et, entre la canalisation de sortie 34B et la canalisation de récupération 44 d'autre part.

Ici encore, il n'est pas obligatoire de faire appel à un réservoir intermédiaire de collecte 24.

Comme précédemment l'UCE permet de gérer et de commander les différents écoulements à travers les électrovannes 32A et 32B pour prendre en compte le niveau de pollution / turbidité de l'eau collecté ainsi que les niveaux de remplissage des différents réservoirs.

Pour certaines applications, la canalisation 44 dite d'évacuation peut être reliée à des moyens de traitement(s) tel(s) que de la filtration ou de la dépollution en vue du recyclage de ce flux de liquide « pollué » et son utilisation en aval, ceci avec un éventuel stockage intermédiaire non représenté.

## Revendications

1. Procédé de récupération d'un liquide collecté sur une surface (1, 19), intérieure ou extérieure, d'un élément de carrosserie (17) ou de vitrage (2) d'un véhicule automobile, **caractérisé en ce qu'**il consiste :
- a) à analyser une quantité de flux de liquide collecté au moyen d'un dispositif (30) de mesure ou d'estimation d'un paramètre représentatif d'un état de pollution du liquide collecté pour fournir une valeur mesurée ou estimée du niveau de pollution du liquide ;
- b) à comparer ladite valeur mesurée ou estimée à au moins une valeur de seuil du niveau de pollution du liquide ;
- c) et, lorsque la valeur mesurée ou estimée est inférieure à ladite valeur de seuil, à orienter au moins une partie du flux de liquide collecté en direction d'une unité (9) de récupération du liquide collecté,
l'étape a) consistant à stocker au moins une partie du flux de liquide collecté dans un réservoir intermédiaire (24) de collecte équipé du dispositif de mesure ou d'estimation.

2. Procédé selon la revendication 1, **caractérisé en ce qu'**il consiste à réitérer l'étape b) de comparaison et, lorsque la valeur mesurée ou estimée est supérieure à ladite valeur de seuil,
- d) à interrompre ladite orientation et à évacuer le flux de liquide collecté.

3. Procédé selon la revendication 1, **caractérisé en ce que** le paramètre représentatif de l'état de pollution du liquide collecté est sa turbidité.

4. Procédé selon la revendication 1 **caractérisé en ce qu'**il consiste à effectuer l'étape b) en fonction d'un niveau de présence d'eau collectée.

5. Procédé selon la revendication 1, **caractérisé en ce que** l'étape b) est déclenchée avec temporisation par rapport à l'étape a) de mesure.

6. Procédé selon la revendication 2, **caractérisé en ce que** l'étape d) est déclenchée immédiatement après la détection d'une valeur mesurée ou estimée supérieure à ladite valeur de seuil.

7. Circuit de récupération d'un liquide collecté sur une surface, intérieure ou extérieure, (1, 19) d'un élément de carrosserie (17) ou de vitrage (2) d'un véhicule automobile, **caractérisé en ce qu'**il comporte :
- une zone de mesure équipée d'un dispositif (30) de mesure ou d'estimation d'un paramètre représentatif de l'état de pollution du liquide collecté pour fournir une valeur mesurée ou estimée du niveau de pollution du liquide, ladite zone de mesure étant un réservoir intermédiaire (24) de collecte d'au moins une partie du flux de liquide collecté ;
- une canalisation de sortie (34) reliée à ladite zone de mesure ;
- un dispositif commandé (32, 32A, 32B) qui est relié à ladite canalisation de sortie (34) et qui, en fonction de ladite valeur mesurée ou estimée du niveau de pollution du liquide collecté, autorise ou interrompt la circulation du flux de liquide collecté en direction d'une unité (9) de récupération du liquide collecté.

8. Circuit selon la revendication 7, **caractérisé en ce que** ledit dispositif est une électrovanne commandée (32, 32A, 32B).

9. Circuit selon la revendication 8, **caractérisé en ce que** l'électrovanne est à commande par électro-aimant et ressort de rappel vers une position stable d'évacuation.

10. Circuit selon la revendication 9, **caractérisé en ce que** ledit dispositif de mesure ou d'estimation est un capteur (30) de mesure de la turbidité du liquide collecté.

11. Circuit selon la revendication 7, **caractérisé en ce que** ladite unité de récupération est une unité d'utilisation ou une unité de stockage du liquide collecté.

## Patentansprüche

1. Verfahren zur Rückgewinnung einer auf einer inneren oder äußeren Oberfläche (1, 19) eines Karosserie- (17) oder Verglasungselements (2) eines Kraftfahrzeugs gesammelten Flüssigkeit, **dadurch gekennzeichnet, dass** es darin besteht:
- a) eine Menge eines Stroms an gesammelter Flüssigkeit mit Hilfe einer Vorrichtung (30) zum Messen oder Schätzen eines Parameters, der für den Verschmutzungszustand der gesammelten Flüssigkeit repräsentativ ist, zu analysieren, um einen gemessenen oder geschätzten Wert des Verschmutzungsgrads der Flüssigkeit zu erhalten;
- b) den gemessenen oder geschätzten Wert mit zumindest einem Schwellenwert für den Verschmutzungsgrad der Flüssigkeit zu vergleichen;
- c) und, wenn der gemessene oder geschätzte Wert unter dem Schwellenwert liegt, zumindest einen Teil des Stroms an gesammelter Flüssigkeit zu einer Einheit (9) zur Rückgewinnung der gesammelten Flüssigkeit zu lenken, wobei der Schritt a) darin besteht, zumindest einen Teil des gesammelten Flüssigkeitsstroms in einem Zwischensammelbehälter (24), der mit der Mess- oder Schätzvorrichtung ausgestattet ist, zu speichern.

2. Verfahren nach Anspruch 1, **dadurch gekennzeichnet, dass** es darin besteht, den Vergleichsschritt b) zu wiederholen und, wenn der gemessene bzw. geschätzte Wert größer als der Schwellenwert ist,
- d) das Lenken zu unterbrechen und den gesammelten Flüssigkeitsstrom abzuleiten.

3. Verfahren nach Anspruch 1, **dadurch gekennzeichnet, dass** der für den Verschmutzungszustand der gesammelten Flüssigkeit repräsentative Parameter ihre Trübung ist.

4. Verfahren nach Anspruch 1, **dadurch gekennzeichnet, dass** es darin besteht, den Schritt b) in Abhängigkeit vom Vorhandensein von gesammeltem Wasser durchzuführen.

5. Verfahren nach Anspruch 1, **dadurch gekennzeichnet, dass** der Schritt b) gegenüber dem Messschritt a) zeitlich verzögert ausgelöst wird.

6. Verfahren nach Anspruch 2, **dadurch gekennzeichnet, dass** der Schritt d) unmittelbar nach der Feststellung eines gemessenen oder geschätzten Wertes, der über dem Schwellenwert liegt, ausgelöst wird.

7. Kreislauf zur Rückgewinnung einer auf einer inneren oder äußeren Oberfläche (1, 19) eines Karosserie- (17) oder Verglasungselements (2) eines Kraftfahrzeugs gesammelten Flüssigkeit, **dadurch gekennzeichnet, dass** er Folgendes umfasst:
- einen Messbereich, der mit einer Vorrichtung (30) zum Messen oder Schätzen eines für den Verschmutzungszustand der gesammelten Flüssigkeit repräsentativen Parameters ausgestattet ist, um einen gemessenen oder geschätzten Wert des Verschmutzungsgrads der Flüssigkeit bereitzustellen, wobei der Messbereich ein Zwischenbehälter (24) zum Sammeln von zumindest einem Teil des Stroms an gesammelter Flüssigkeit ist;
- eine mit dem Messbereich verbundene Abflussleitung (34);
- eine gesteuerte Vorrichtung (32, 32A, 32B), die mit der Abflussleitung (34) verbunden ist und die in Abhängigkeit von dem gemessenen oder geschätzten Wert des Verschmutzungsgrads der gesammelten Flüssigkeit die Zirkulation des Stroms an gesammelter Flüssigkeit zu einer Einheit (9) zur Rückgewinnung der gesammelten Flüssigkeit zulässt oder unterbricht.

8. Kreislauf nach Anspruch 7, **dadurch gekennzeichnet, dass** die Vorrichtung ein gesteuertes Magnetventil (32, 32A, 32B) ist.

9. Kreislauf nach Anspruch 8, **dadurch gekennzeichnet, dass** das Magnetventil durch einen Elektromagneten und einen Federrücklauf in eine stabile Ablassposition gesteuert wird.

10. Kreislauf nach Anspruch 9, **dadurch gekennzeichnet, dass** die Mess- oder Schätzvorrichtung ein Sensor (30) zur Messung der Trübung der gesammelten Flüssigkeit ist.

11. Kreislauf nach Anspruch 7, **dadurch gekennzeichnet, dass** die Rückgewinnungseinheit eine Einheit zur Nutzung oder eine Einheit zur Speicherung der gesammelten Flüssigkeit ist.

## Claims

1. Method for recovering a liquid collected on an interior or exterior surface (1, 19) of a motor vehicle bodywork (17) or glazing (2) element, **characterized in that** it consists:
- a) in analysing a quantity of the collected liquid stream using a device (30) for measuring or estimating a parameter indicative of a state of pollution of the collected liquid 1 so as to provide a measured or estimated value of the level of pollution of the liquid;
- b) in comparing the said measured or estimated value against at least one threshold value for the level of pollution of the liquid;
- c) and, when the measured or estimated value is below the said threshold value, in directing at least part of the collected liquid stream towards a collected-liquid recovery unit (9),
step a) consisting in storing at least part of the collected liquid stream in an intermediate collecting reservoir (24) equipped with the measurement or estimation device.

2. Method according to Claim 1, **characterized in that** it consists in repeating comparison step b) and, when the measured or estimated value is above the said threshold value,
- d) in interrupting the said directing and in discharging the collected liquid stream.

3. Method according to Claim 1, **characterized in that** the parameter indicative of the state of pollution of the collected liquid is its turbidity.

4. Method according to Claim 1, **characterized in that** it consists in performing step b) according to a collected-water level.

5. Method according to Claim 1, **characterized in that** step b) is triggered with a time delay with respect to measurement step a).

6. Method according to Claim 2, **characterized in that** step d) is triggered immediately after a measured or estimated value above the said threshold value is detected.

7. Circuit for recovering a liquid collected on an interior or exterior surface (1, 19) of a motor vehicle bodywork (17) or glazing (2) element, **characterized in that** it comprises:
- a measurement zone equipped with a device (30) for measuring or estimating a parameter indicative of the state of pollution of the collected liquid so as to supply a measured or estimated value of the level of pollution of the liquid;
- an outlet pipe (34) connected to the said measurement zone;
- a commanded device (32, 32A, 32B) which is connected to the said outlet pipe (34) and which, according to the said measured or estimated value of the level of pollution of the collected liquid, authorizes or interrupts the circulation of the collected liquid stream towards a collected-liquid recovery unit (9).

8. Circuit according to Claim 7, **characterized in that** the said device is a commanded solenoid valve (32, 32A, 32B).

9. Circuit according to Claim 8, **characterized in that** the solenoid valve is commanded by an electromagnet and a return spring towards a stable discharge position.

10. Circuit according to Claim 9, **characterized in that** the said measurement or estimation device is a sensor (30) for measuring the turbidity of the collected liquid.

11. Circuit according to Claim 7, **characterized in that** the said recovery unit is a usage unit or a storage unit respectively using or storing the collected liquid.
